# EUROPÄISCHE PATENTSCHRIFT

(11) **EP 3 862 270 B1**
(45) Veröffentlichungstag und Bekanntmachung des Hinweises auf die Patenterteilung: **25.10.2023**
(21) Anmeldenummer: 21155578.4
(22) Anmeldetag: 05.02.2021
(51) Int. Cl.: B64D 11/00

(54) **STAUFACH FÜR EIN FLUGZEUG SOWIE FLUGZEUG MIT DEM STAUFACH**
STORAGE COMPARTMENT FOR AN AIRCRAFT AND AIRCRAFT HAVING THE STORAGE COMPARTMENT
COMPARTIMENT DE RANGEMENT POUR UN AVION, AINSI QU'AVION POURVU DU COMPARTIMENT DE RANGEMENT

(30) Priorität: 08.02.2020 DE 102020000835
(43) Veröffentlichungstag der Anmeldung: 11.08.2021
(73) Patentinhaber: Diehl Aviation Laupheim GmbH, 88471 Laupheim (DE)
(72) Erfinder: Pfinder, Dirk, 88481 Balzheim (DE); Siessegger, Daniel, 88480 Achstetten (DE)
(74) Vertreter: Diehl Patentabteilung

(56) Entgegenhaltungen:
- US-A1- 2014 246 968
- US-A1- 2014 283 336

## Beschreibung

Die Erfindung betrifft ein Staufach für ein Flugzeug mit den Merkmalen des Oberbegriffs des Anspruchs 1. Ferner betrifft die Erfindung ein Flugzeug mit dem Staufach.

Es sind Gepäckfächer für Flugzeuge bekannt, welche in einem Überkopfbereich einer Passagierkabine von Flugzeugen angeordnet sind und zur Aufnahme von Handgepäckstücken dienen. Derartige Gepäckfächer weisen in der Regel eine absenkbare Schütte zur Aufnahme der Gepäckstücke auf, welche zum Öffnen händisch durch einen Benutzer abgesenkt und zum Schließen angehoben wird. Beim Beladen der Schütte wird das Gesamtgewicht der Schütte erhöht, was insbesondere beim Schließen der Gepäckfächer einen erhöhten Kraftaufwand zur Folge hat. Es sind Kraftunterstützungssysteme bekannt, welche bei Bedarf durch den Benutzer zugeschaltet werden können, um die Schütte mit einem zusätzlichen Schließmoment aus einem Kraftspeicher zu beaufschlagen, sodass der zum Schließen notwendigen Kraftaufwand reduziert wird.

Die Druckschrift EP 3371052 A1 offenbart ein Überkopf-Gepäckfach für ein Flugzeug mit einem oberen Gepäckfachelement, mit einem unteren Gepäckfachelement, welches zwischen einer Schließ- und einer Offenstellung beweglich ist, mit einer Halteeinrichtung zum Halten des unteren Gepäckfachelements in dessen Schließstellung, mit einer Hebefeder zur Unterstützung der Bewegung des unteren Gepäckfachelements aus der Offenstellung in die Schließstellung, und mit einer Rückhalteeinrichtung zur Fixierung der Hebefeder im gespannten Zustand in der Offenstellung des unteren Gepäckfachelementes, wobei ein Betätigungsgriff zur Freigabe der Rückhalteeinrichtung in der Offenstellung des unteren Gepäckfachelementes vorgesehen ist. Das untere Gepäckfachelement ist dabei unabhängig von dessen Beladungszustand, wahlweise mit Unterstützung durch die Hebefeder oder mit im gespannten Zustand fixierter Hebefeder von der Offenstellung in Richtung der Schließstellung beweglich.

Aus der US 2014 / 0283336 A1 ist ein Verfahren und eine Vorrichtung zum Unterstützen der Bewegung eines Staufaches in eine geschlossene Position bekannt. Ein dem Staufach zugeordnetes Assistenzsystem kann als Reaktion auf eine Betätigung eines dem Staufach zugeordneten Schalters aktiviert werden. Das Assistenzsystem kann ein Vorspannsystem und einen Schalter umfassen. Das Vorspannsystem kann konfiguriert sein, um eine Kraft in einer Richtung zu einer geschlossenen Position für das Staufach zu erzeugen. Ein Schalter kann mit dem Vorspannsystem verbunden und so konfiguriert sein, dass er das Vorspannsystem aktiviert, wenn eine ausgewählte Gewichtsmenge in dem Staufach vorhanden ist. Die Kraft in Richtung der geschlossenen Position für das Staufach kann als Reaktion auf das Aktivieren des Assistenzsystems erzeugt werden. Aus der US 2014 / 0246968 A1 ist eine Kraftunterstützungsvorrichtung zur Verwendung in einem Gepäckfach mit einer Klappschale bekannt. Diese weist einen Lastmessmechanismus, einen Kraftunterstützungsmechanismus und einen Betätigungsmechanismus auf. Der Lastmessmechanismus wird durch den Betätigungsmechanismus von dem inaktiven Betriebszustand in den aktiven Betriebszustand überführt, wenn die durch den Lastmessmechanismus ermittelte Last einen bestimmten Schwellenwert überschreitet, der größer als eine Unterstützungskraft ist. Der Betätigungsmechanismus weist zusammenwirkende Verriegelungselemente auf, von denen ein erstes Element mit einem ersten Anlagepunkt verbunden ist und ein zweites Element mit einem zweiten Anlagepunkt verbunden ist. Die Verriegelungselemente können sich derart relativ zueinander bewegen, dass in einem inaktiven Betriebszustand das eine Verriegelungselement reibschlüssig in das zusammenwirkende andere Verriegelungselement eingreift und dieses in einem aktiven Betriebszustand freigibt.

Es ist Aufgabe der vorliegenden Erfindung ein Staufach für ein Flugzeug vorzuschlagen, welches sich durch eine verbesserte Bedienbarkeit auszeichnet.

Die Aufgabe wird durch ein Staufach gemäß Anspruch 1 sowie durch ein Flugzeug gemäß Anspruch 11 gelöst. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Gegenstand der Erfindung ist ein Staufach, welches für ein Flugzeug, insbesondere ein Passagierflugzeug, ausgebildet und/oder geeignet ist. Insbesondere ist das Staufach in einem Überkopfbereich einer Flugzeugkabine, vorzugsweise einer Passagierkabine, des Flugzeugs angeordnet und/oder anordenbar. Bevorzugt ist das Staufach als ein Überkopf-Gepäckfach, auch als sogenanntes "OHSC" (Overhead Storage Compartment) bekannt, ausgebildet.

Das Staufach weist ein Staufachgehäuse auf, welches zur Befestigung an einer Flugzeugstruktur ausgebildet und/oder geeignet ist. Insbesondere ist das Staufachgehäuse innerhalb der Flugzeugkabine in dem Überkopfbereich an der Flugzeugstruktur befestigt. Vorzugsweise weist das Staufachgehäuse eine oder mehrere mechanische Schnittstellen zur Befestigung des Staufachgehäuses an der Flugzeugstruktur auf.

Das Staufach weist ein Schwenkfach auf, welches zur Aufnahme von Staugut, insbesondere Gepäckstücke, ausgebildet und/oder geeignet ist. Insbesondere ist das Schwenkfach als eine Schütte, im Speziellen als ein sogenannter "Pivot-Bin", ausgebildet. Das Schwenkfach ist in dem Staufachgehäuse über ein Schwenklager um eine Schwenkachse schwenkbar gelagert. Um die Schwenkachse kann das Schwenkfach dabei in einem Schwenkbereich zwischen einer Offenstellung und einer Schließstellung verschwenkt werden. Insbesondere ist der Schwenkbereich als ein Winkelbereich, von beispielsweise mehr als 45 Grad, vorzugsweise mehr als 65 Grad, im Speziellen mehr als 90 Grad, um die Schwenkachse zu verstehen. In der Offenstellung ist das Staufach geöffnet, sodass eine Be- und eine Entladung des Stauguts möglich ist. In der Schließstellung ist das Staufach hingegen geschlossen bzw. nicht von außen zugänglich.

Ferner weist das Schwenkfach eine Kraftunterstützungsvorrichtung auf. Die Kraftunterstützungsvorrichtung hat insbesondere die Funktion das Schwenkfach bei einem Schließvorgang zu unterstützen und/oder zu entlasten. Hierzu weist die Kraftunterstützungsvorrichtung eine Unterstützungskrafteinheit auf, wobei die Unterstützungskrafteinheit wahlweise in einen Aktivzustand oder einen Passivzustand bringbar ist. Dabei stellt die Unterstützungskrafteinheit in dem Aktivzustand eine in Richtung der Schließstellung wirkende Unterstützungskraft bereit, welche bei einer Schließbewegung des Schwenkfachs von der Offenstellung in Richtung der Schließstellung eine Kraftunterstützung an dem Schwenkfach bewirkt. Insbesondere wirkt die Unterstützungskraft einer auf das Schwenkfach wirkenden Last entgegen. Im Passivzustand hingegen ist die Unterstützungskrafteinheit inaktiv. Dies bedeutet, dass im Passivzustand die Unterstützungskraft gleich Null ist, sodass keine Kraftunterstützung bezüglich des händischen Schließens oder Öffnens des Schwenkfachs erfolgt. Insbesondere resultiert aus der Unterstützungskraft ein auf das Schwenkfach wirkendes Unterstützungsmoment um die Schwenkachse. Prinzipiell kann die Unterstützungskraft und/oder das Unterstützungsmoment in dem Aktivzustand konstant sein. Alternativ kann die Unterstützungskraft und/oder das Unterstützungsmoment jedoch auch variabel oder einstellbar sein. Im Speziellen kann die Unterstützungskraft und/oder das Unterstützungsmoment im Aktivzustand vom Schwenkwinkel des Schwenkfachs abhängig sein. Vorzugsweise weist die Unterstützungskrafteinheit einen Kraftspeicher auf, welcher im Aktivzustand der Unterstützungskrafteinheit bei einer Bewegung des Schwenkfachs zu der Schließstellung hin Arbeit in Form der Unterstützungskraft an das Schwenkfach abgibt und bei einer Bewegung des Schwenkfachs zu der Offenstellung hin Arbeit durch eine von außen auf das Schwenkfach wirkende Kraft, z.B. Gewichtskraft des Schwenkfachs und/oder durch den Benutzer aufgebrachte Öffnungskraft, aufnimmt.

Die Kraftunterstützungsvorrichtung weist eine Betätigungseinheit mit einer Betätigungseinrichtung auf, welche zur Betätigung der Unterstützungskrafteinheit ausgebildet und/oder geeignet ist. Bei der Betätigung der Betätigungseinrichtung wird die Unterstützungskrafteinheit von dem Passivzustand in den Aktivzustand geschaltet. Insbesondere dient die Betätigungseinrichtung zur manuellen Betätigung der Unterstützungskrafteinheit. Dabei kann der Benutzer die Unterstützungskrafteinheit durch Betätigung der Betätigungseinrichtung unabhängig vom Beladungszustand des Schwenkfaches zuschalten, sodass der Schließvorgang des Schwenkfachs wahlweise mit oder ohne Kraftunterstützung umgesetzt wird.

Im Rahmen der Erfindung wird vorgeschlagen, dass eine Betätigung der Betätigungseinrichtung in der Schließstellung des Schwenkfachs verhindert und in der Offenstellung des Schwenkfachs möglich ist. Insbesondere ist die Betätigungseinrichtung in der Schließstellung des Schwenkfachs verdeckt und/oder gesperrt und/oder inaktiv, sodass die Betätigungseinrichtung nicht durch den Benutzer betätigt werden kann. Insbesondere ist die Betätigungseinrichtung in der Offenstellung zugänglich und/oder freigegeben und/oder aktiv, sodass die Betätigungseinrichtung durch den Benutzer betätigt werden kann. Bevorzugt ist die Betätigung der Betätigungseinrichtung ausschließlich in der Schließstellung verhindert. Alternativ oder optional ergänzend ist die Betätigung der Betätigungseinrichtung ausschließlich in der Offenstellung möglich. Es kann jedoch auch vorgesehen sein, dass eine Betätigung der Betätigungseinrichtung sowohl in der Offenstellung als auch in einer beliebigen Zwischenstellung des Schwenkfachs zwischen der Offen- und der Schließstellung möglich ist.

Der Vorteil der Erfindung besteht insbesondere darin, dass durch das Verhindern der Betätigung der Betätigungseinrichtung in der Schließstellung, ein versehentliches oder unsachgemäßes Auslösen der Betätigungseinrichtung durch den Benutzer vermieden werden kann. Somit kann eine Beschädigung oder Fehlfunktion der Kraftunterstützungsvorrichtung verhindert werden und zudem die Bediensicherheit des Staufachs erhöht werden.

In einer konstruktiven Umsetzung ist vorgesehen, dass die Betätigungseinrichtung in dem Schwenkfach angeordnet ist. Insbesondere ist die Betätigungseinrichtung somit in der Öffnungsstellung über eine durch das Schwenkfach definierte Ladeöffnung und/oder über den durch das Schwenkfach definierten Stauraum zugänglich. In der Schließstellung ist die Betätigungseinrichtung durch das Schwenkfachgehäuse verdeckt. Besonders bevorzugt ist durch die Anordnung der Betätigungseinrichtung in dem Schwenkfach eine versteckte und/oder leicht zugängliche Anordnung der Betätigungseinrichtung in der Offenstellung des Schwenkfachs realisierbar.

Alternativ oder optional ergänzend ist die Betätigungseinrichtung seitlich an dem Schwenkfach angeordnet. Insbesondere kann die Betätigungseinrichtung wahlweise innerhalb oder außerhalb des Schwenkfachs, insbesondere des Stauraums, angeordnet sein. In der Schließstellung ist die Betätigungseinrichtung durch das Schwenkfachgehäuse verdeckt. Bevorzugt ist durch die seitliche Anordnung der Betätigungseinrichtung eine einfache Bedienung bzw. Erreichbarkeit der Betätigungseinrichtung in der Offenstellung des Schwenkfachs realisierbar.

In einer Weiterbildung ist vorgesehen, dass das Schwenkfach an seiner Vorderseite eine Beladekante, auch als "Bin Lip" bekannt, aufweist. Insbesondere dient die Beladekante zur Sicherung des Stauguts in der Offenstellung des Schwenkfachs und/oder als Handgriff zum Öffnen oder Schließen des Schwenkfachs. Insbesondere erstreckt sich die Beladekante, insbesondere in Flugzeuglängsrichtung, über die gesamte Breite des Schwenkfachs. Bevorzugt definiert die Beladekante eine Vorderkante des Schwenkfachs. Im Speziellen kann die Beladekante durch einen Steg oder eine Leiste gebildet sein. Die Betätigungseinrichtung ist dabei in dem Schwenkfach an der Beladekante angeordnet. Die Betätigungseinrichtung kann dabei wahlweise auf der Beladekante angeordnet und/oder befestigt sein oder in die Beladekante integriert und/oder versenkt sein. Im Speziellen ist die Betätigungseinrichtung in der Öffnungsstellung außerhalb eines Sichtbereichs angeordnet und/oder durch die Beladekante verdeckt. Es ist eine Überlegung der Erfindung, eine Betätigungseinheit vorzuschlagen, welche sich durch eine platzsparende Anordnung der Betätigungseinrichtung auszeichnet.

In einer alternativen Weiterbildung ist vorgesehen, dass das Schwenkfach eine Seitenwand aufweist, welche zur seitlichen Begrenzung des Staufachs ausgebildet und/oder geeignet ist. Die Betätigungseinrichtung kann außerhalb des Schwenkfachs an der Seitenwand angeordnet sein. Insbesondere ist zwischen der Seitenwand und dem Staufachgehäuse ein Zwischenraum, insbesondere ein Luftspalt, gebildet, wobei die Betätigungseinrichtung in der Schließstellung des Schwenkfachs in dem Zwischenraum verdeckt angeordnet ist. In der Offenstellung ist die Betätigungseinrichtung außerhalb des Zwischenraums angeordnet und somit frei zugänglich und/oder in dem Sichtbereich angeordnet. Alternativ kann die Betätigungseinrichtung innerhalb des Schwenkfachs an der Seitenwand angeordnet sein. In der Schließstellung des Schwenkfachs ist die Betätigungseinrichtung in dem Stauraum verdeckt angeordnet. In der Offenstellung ist die Betätigungseinrichtung über die Ladeöffnung frei zugänglich und/oder in dem Sichtbereich angeordnet. Somit wird eine Betätigungseinrichtung vorgeschlagen, welche sich aufgrund der seitlichen Anordnung einfach zugänglich und/oder bedienbar ist und zugleich einfach zu montieren ist.

In einer weiteren Ausgestaltung ist vorgesehen, dass die Betätigungseinheit einen Seilzug aufweist, welcher zur Übertragung einer Betätigungskraft von der Betätigungseinrichtung auf die Unterstützungskrafteinheit ausgebildet und/oder geeignet ist. Insbesondere ist die Betätigungseinrichtung über den Seilzug mit einem Betätigungsmechanismus verbunden. Der Betätigungsmechanismus hat dabei die Funktion, die Unterstützungskrafteinheit unter Einwirkung der Betätigungskraft von dem Passivzustand in den Aktivzustand zu schalten. Vorzugsweise ist der Betätigungsmechanismus ausgebildet die Betätigungskraft in eine mechanische Bewegung umzusetzen. Besonders bevorzugt ist der Seilzug als ein Bowdenzug ausgeführt. Beispielsweise kann der Seilzug ausgehend von der Betätigungseinrichtung an einer Unterkante des Schwenkfachs, insbesondere der Seitenwand, zu der Unterstützungskrafteinheit hin verlegt sein. Es wird somit eine Betätigungseinheit vorgeschlagen, welche sich durch einen besonders einfachen und kostengünstigen Aufbau auszeichnet. Zudem wird durch den Seilzug eine flexible Kraftübertragung umgesetzt, welche eine hohe Gestaltungsfreiheit bei der Anordnung der Betätigungseinrichtung ermöglicht.

In einer weiteren, nicht beanspruchten Konkretisierung ist vorgesehen, dass die Betätigungseinrichtung einen Druckknopf aufweist, Insbesondere ist der Druckknopf als eine Taste zu verstehen, welche durch Drücken betätigt und nach dem Loslassen selbsttätig in seine Ausgangslage zurückkehrt. Hierzu ist der Druckknopf vorzugsweise über ein Federorgan belastet. Beim Drücken des Druckknopfs wird die Unterstützungskrafteinheit von dem Passivzustand in den Aktivzustand geschaltet. Bevorzugt wird durch Drücken des Druckknopfs die Betätigungskraft als eine Druckkraft erzeugt und über den Seilzug auf die Unterstützungskrafteinheit, insbesondere den Betätigungsmechanismus, übertragen. Es somit eine Überlegung der Erfindung, eine Betätigungseinrichtung vorzuschlagen, welche sich durch eine besonders einfache Bedienung auszeichnet und zugleich kostengünstig umsetzbar ist.

In einer nicht beanspruchten Weiterbildung ist vorgesehen, dass die Betätigungseinrichtung einen Kipphebel aufweist. Insbesondere ist unter einem Kipphebel ein zweiseitiger Hebel zu verstehen, welcher um einen Drehpunkt drehbar gelagert ist. Der Kipphebel kann wahlweise als ein gerader oder als ein geknickter Hebel ausgebildet sein. Der Druckknopf greift dabei an einem Hebelende und der Seilzug am anderen Hebelende des Kipphebels an, sodass eine beim Drücken des Druckknopfs erzeugte Druckkraft in eine auf den Seilzug wirkende Zugkraft als die Betätigungskraft umgewandelt wird. Insbesondere ist der Kipphebel und/oder der Seilzug fest an dem jeweils zugehörigen Hebelende angebunden. Vorzugsweise ist der Druckknopf über den Kipphebel mit dem Seilzug bewegungsgekoppelt, sodass der Kipphebel und der Seilzug beim Loslassen des Druckknopfs selbsttätig in ihre Ausgangslage zurückgestellt werden.

In einer alternativen, nicht beanspruchten Weiterbildung ist vorgesehen, dass die Betätigungseinrichtung mindestens oder genau eine Umlenkrolle aufweist, Insbesondere ist die Umlenkrolle als eine feste Rolle zu verstehen, welche auf einer Drehachse drehbar gelagert ist und zur Umlenkung der Betätigungskraft dient. Der Seilzug ist dabei über die Umlenkrolle an dem Druckknopf angebunden, sodass eine beim Drücken des Druckknopfs erzeugte Druckkraft in eine auf den Seilzug wirkende Zugkraft als die Betätigungskraft umgelenkt wird. Bevorzugt dient die Umlenkrolle zur rutschfesten Führung eines Zugseils des Seilzugs, wobei beim Drücken des Druckknopfes eine Rollbewegung zwischen der Umlenkrolle und dem Zugseil abläuft. Insbesondere ist der Seilzug über die Umlenkrolle um zumindest annähernd 90 Grad, vorzugsweise um zumindest annähernd 180 Grad umgelenkt. Dabei sind unter der Formulierung "zumindest annähernd" Winkelabweichungen von beispielsweise +/- 10 Grad zu verstehen. Im Speziellen weist die Betätigungseinrichtung eine weitere Umlenkrolle auf, wobei der Seilzug jeweils über die beiden Umlenkrollen umgelenkt. Beispielsweise kann der Seilzug über die eine Umlenkrolle um 90 Grad und über die andere Umlenkrolle um weitere 90 Grad umgelenkt sein.

Gemäß der Erfindung ist vorgesehen, dass die Betätigungseinrichtung sperrbar ist. Die Betätigungseinrichtung ist zwischen einem Sperrzustand und einem Freigabezustand schaltbar, wobei ein Auslösen der Betätigungseinrichtung in dem Sperrzustand verhindert und gesperrt ist und in dem Freigabezustand möglich und freigegeben ist. Insbesondere kann die Betätigungseinrichtung unabhängig von der Stellung des Schwenkfachs freigegeben oder gesperrt sein. Die Betätigungseinheit weist ein Schlüsselorgan auf, welches zum Entsperren der Betätigungseinrichtung ausgebildet und/oder geeignet ist. Prinzipiell ist das Schlüsselorgan ausgebildet, mittels Berührung und/oder Schlüssel-Schlossprinzip die Betätigungseinrichtung zu entsperren. Alternativ kann das Schlüsselorgan jedoch auch ausgebildet sein, die Betätigungseinrichtung berührungslos zu entsperren. Bevorzugt ist das Schlüsselorgan als ein handgeführtes Schlüsselorgan ausgebildet. Es wird somit eine Betätigungseinheit vorgeschlagen, welche sich durch eine erhöhte Bediensicherheit auszeichnet, wobei durch das Schlüsselorgan sichergestellt werden kann, dass nur ein autorisierter Benutzer die Betätigungseinrichtung auslösen kann.

In einer weiteren Konkretisierung ist vorgesehen, dass das Schlüsselorgan als ein mechanischer und/oder elektrischer und/oder magnetischer Schlüssel ausgebildet ist. Als mechanischer Schlüssel ausgebildet, kann das Schlüsselorgan beispielsweise als ein üblicher Schlüssel ausgebildet sein, welcher zum Entsperren mit einem entsprechenden Schloss der Betätigungseinrichtung interagiert. Alternativ kann der mechanische Schlüssel jedoch auch als ein Sonderwerkzeug mit einer Sondergeometrie ausgebildet sein, welches zum Entsperren mit einer komplementären Gegenschnittstelle der Betätigungseinrichtung interagiert. Als elektrischer und/oder magnetischer Schlüssel ausgebildet, kann das Schlüsselorgan als ein Magnetkartenschlüssel oder RFID-Schlüssel ausgebildet sein, welches zum Entsperren von einem Lesemodul der Betätigungseinrichtung ausgelesen werden kann. Alternativ kann das Schlüsselorgan jedoch auch als ein rein magnetischer Schlüssel ausgebildet sein, welcher zum Entsperren mit einem entsprechenden Magnetschloss der Betätigungseinrichtung interagieren kann. Somit ist ein Auslösen der Betätigungseinrichtung nur in Kombination mit dem entsprechenden Schlüsselorgan möglich, sodass die Bediensicherheit der Betätigungseinrichtung deutlich erhöht ist.

In einer konkreten Ausführung ist vorgesehen, dass das Schlüsselorgan zur Betätigung der Betätigungseinrichtung dient, wobei durch Drehen des Schlüsselorgans die Unterstützungskrafteinheit von dem Passivzustand in den Aktivzustand geschaltet wird. Bevorzugt ist das Schlüsselorgan hierzu als der mechanische Schlüssel ausgebildet. Insbesondere wird beim Entsperren der Betätigungseinrichtung zugleich die Betätigungskraft erzeugt. Hierzu wird der mechanische Schlüssel in das Schloss bzw. die Gegenschnittstelle eingesteckt und anschließend verdreht, um die Betätigungseinrichtung zu Entsperren und zugleich zu Betätigen. Vorzugsweise steht der Seilzug hierzu mit dem Schlüsselorgan in Wirkverbindung, sodass die beim Drehen aufgebrachte Handkraft als die Betätigungskraft auf den Seilzug übertragbar ist. Somit wird eine sperrbare Betätigungseinrichtung vorgeschlagen, welche sich durch eine besonders kompakte und kostengünstige Ausführung auszeichnet.

In einer weiteren Realisierung ist vorgesehen, dass die Kraftunterstützungsvorrichtung bezüglich der Erzeugung der Unterstützungskraft elektrizitätsfrei und/oder rein mechanisch ausgeführt ist. Alternativ oder optional ergänzend ist die Kraftunterstützungsvorrichtung bezüglich der Umschaltung zwischen Aktivzustand und Passivzustand elektrizitätsfrei und/oder rein mechanisch ausgeführt ist. Der Ausdruck "elektrizitätsfrei" ist dahingehend zu verstehen, als dass keinerlei elektrische, elektronische, elektromechanische oder sonstige auf Elektrizität beruhende Elemente beteiligt sind. Somit wird eine Kraftunterstützungsvorrichtung vorgeschlagen wird, welche sich durch einen besonders einfachen und kostengünstigen Aufbau auszeichnet.

In einer ersten Umsetzung kann die Unterstützungskrafteinheit eine Gasdruckfeder als den Kraftspeicher aufweisen, welche zur Erzeugung der Unterstützungskraft ausgebildet und/oder geeignet ist. Die Unterstützungskrafteinheit weist ein Halteteil auf, wobei die Gasdruckfeder an dem Halteteil, insbesondere gelenkig, befestigt ist. Das Halteteil ist dabei an dem Staufachgehäuse, insbesondere an einer Seitenwand des Staufachgehäuses, angeordnet. Die Gasdruckfeder weist ein freies Gasdruckfederende auf, wobei das Gasdruckfederende in dem Aktivzustand mit dem Schwenkfach in Wirkverbindung bringbar ist und/oder wirkverbunden ist, um das Schwenkfach mit der Unterstützungskraft zu beaufschlagen. Insbesondere leitet das Gasdruckfederende die Unterstützungskraft an einem Angriffspunkt in das Schwenkfach ein, um das Unterstützungsmoment um die Schwenkachse zu erzeugen.

In einer alternativen Umsetzung kann die Unterstützungskrafteinheit eine Spiralfeder als den Kraftspeicher aufweisen, welche zur Erzeugung der Unterstützungskraft ausgebildet und/oder geeignet ist. Die Unterstützungskrafteinheit weist ein Aufnahmegehäuse auf, wobei die Spiralfeder in dem Aufnahmegehäuse aufgenommen, insbesondere aufgewickelt, ist. Das Aufnahmegehäuse ist dabei an dem Staufachgehäuse, insbesondere an der Seitenwand des Staufachgehäuses, angeordnet. Die Spiralfeder weist ein freies Spiralfederende auf, wobei das Spiralfederende in dem Aktivzustand mit dem Schwenkfach in Wirkverbindung bringbar ist und/oder wirkverbunden ist, um das Schwenkfach mit der Unterstützungskraft zu beaufschlagen. Insbesondere leitet das Spiralfederende die Unterstützungskraft an einem Angriffspunkt in das Schwenkfach ein, um das Unterstützungsmoment um die Schwenkachse zu erzeugen.

Ein weiterer Gegenstand der Erfindung betrifft ein Flugzeug mit dem Staufach wie dies bereits zuvor beschrieben wurde. Insbesondere ist das Flugzeug als Passagierflugzeug ausgebildet, wobei das Staufach in dem Überkopfbereich der Passagierkabine angeordnet ist und zur Aufnahme von Handgepäck dient.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen:
- Figur 1a, b: eine Seitenansicht eines Staufachs für ein Flugzeug in zwei unterschiedlichen Betriebszuständen als ein Ausführungsbeispiel der Erfindung;
- Figur 2a: das Staufach in gleicher Darstellung wie Figur 1b in einem weiteren Betriebszustand;
- Figur 2b: eine perspektivische Darstellung einer Unterstützungskrafteinheit für das Staufach;
- Figur 3a: eine perspektivische Darstellung einer alternativen Ausführung des Staufachs als weiteres Ausführungsbeispiel der Erfindung;
- Figur 3b: eine Explosionsdarstellung einer Unterstützungskrafteinheit für das Staufach der Figur 3a;
- Figur 4a: eine schematische Schnittdarstellung einer alternativen Ausführung des Schwenkfachs des Staufachs der Figur 3a;
- Figur 4b: eine Detailansicht einer alternativen Ausführung des Schwenkfachs des Staufachs der Figur 3a;
- Figur 5a, b, c: eine schematische Darstellung einer Betätigungseinheit für das Staufach in unterschiedlichen Ausführungen, von denen nur Figur 5c erfindungsgemäß ist.

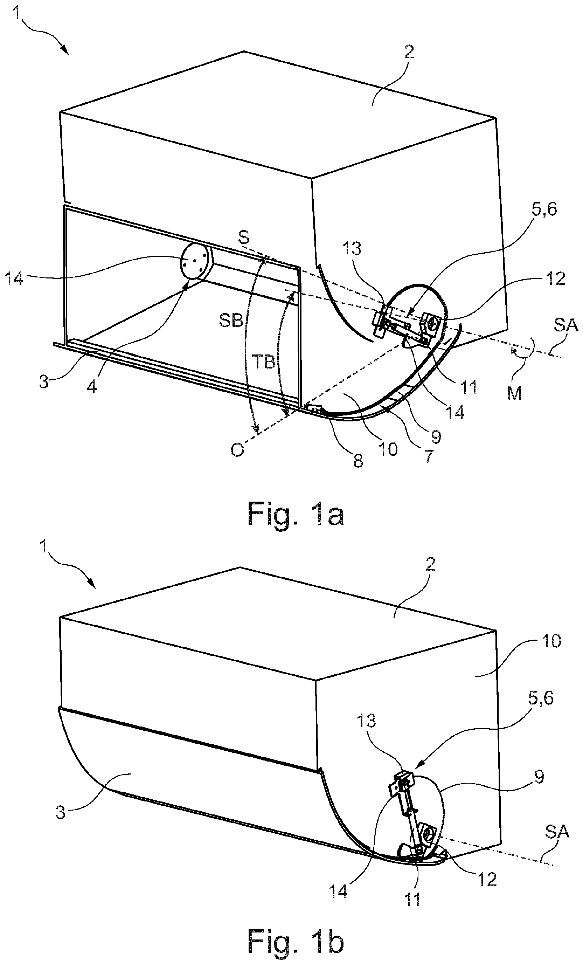

Die Figuren 1a, b zeigen jeweils in einer axialen Ansicht in Bezug auf eine Schwenkachse SA ein Staufach 1, welches zur Anordnung in einem Überkopfbereich einer Passagierkabine eines Flugzeugs, insbesondere eines Passagierflugzeugs, dient. Das Staufach 1 weist ein Staufachgehäuse 2 sowie ein in dem Staufachgehäuse 2 um die Schwenkachse SA schwenkbar gelagertes Schwenkfach 3 auf. Das Staufachgehäuse 2 ist an einer Flugzeugstruktur des Flugzeugs montierbar. Das Schwenkfach 3 ist als eine Schütte ausgebildet und dient zur Aufnahme von Staugut, wie z.B. Handgepäckstücke.

Das Schwenkfach 3 ist beidseitig über jeweils ein Schwenklager 4 an dem Staufachgehäuse 2 gelagert, wobei das Schwenkfach 3 relativ zu dem Staufachgehäuse 2 über das Schwenklager 4 in einem Schwenkbereich SB zwischen einer Offenstellung O und einer Schließstellung S verschwenkbar ist. In der Offenstellung O, wie in Figur 1a gezeigt, ist das Schwenkfach 3 zum Einlegen oder Entnehmen des Stauguts zugänglich. In der Schließstellung S, wie in Figur 1b gezeigt, ist das Schwenkfach 3 in das Staufachgehäuse 2 eingeschwenkt, sodass ein Zugang zu dem Schwenkfach 3 blockiert ist.

Im beladenen Zustand des Schwenkfaches 3 können große Handkräfte notwendig sein, um das Schwenkfach 3 von der Offenstellung O in die Schließstellung S zu bewegen. Aus dem Stand der Technik sind diverse vollautomatische Lösungen bekannt, welche beispielsweise mit einem Elektromotor eine zusätzliche Kraft in Richtung der Schließstellung erzeugen, um den Schließvorgang zu unterstützen. Der Nachteil hierbei sind insbesondere hohe Kosten, ein hohes Gewicht sowie der elektrische Leistungsbedarf. Des Weiteren sind kraftunterstützende Systeme bekannt, welche auf einer elektronischen Wiegeeinheit und der elektrischen Zuschaltung eines mechanischen Kraftspeichers beruhen. Der Nachteil hierbei sind wiederum hohe Kosten, der Aufwand für die elektrische Versorgung sowie die Gefahr einer Fehlauslösung.

Es wird somit eine Kraftunterstützungsvorrichtung 5 vorgeschlagen, welche dazu ausgebildet ist, eine rein mechanische Kraftunterstützung für das absenkbare Schwenkfach 3 bereitzustellen. Die Kraftunterstützungsvorrichtung 5 weist eine mechanische Unterstützungskrafteinheit 6 auf, welche ausgebildet ist, zur Kraftunterstützung eine Unterstützungskraft auf das Schwenkfach 3 zu übertragen. Dabei kann die Unterstützungskrafteinheit 5 nur einseitig angeordnet sein. Optional kann jedoch auch eine weitere Unterstützungskrafteinheit 5 auf der gegenüberliegenden Seite vorgesehen sein.

Die Unterstützungskrafteinheit 6 ist wahlweise zwischen einem Aktivzustand und einem Passivzustand schaltbar. In dem Aktivzustand stellt die Unterstützungskrafteinheit 6 die Unterstützungskraft bereit. Aus der Unterstützungskraft resultiert ein Unterstützungsmoment M um die Schwenkachse SA, welches einer auf das Schwenkfach 3 wirkenden Last in einem Teilbereich TB des Schwenkbereichs SB entgegenwirkt, wodurch eine zum Schließen des Schwenkfachs 3 benötigte Handkraft eines Benutzers reduziert wird. In dem Passivzustand stellt die Unterstützungskrafteinheit 6 keine Unterstützungskraft bereit, sodass das Schwenkfach 3 ausschließlich durch die Handkraft aus der Offenstellung O in die Schließstellung S verschwenkt werden muss.

Die Kraftunterstützungsvorrichtung 5 weist eine Betätigungseinheit 7 mit einer Betätigungseinrichtung 8 zur Betätigung der Unterstützungskrafteinheit 6 auf, wobei bei einer Betätigung der Betätigungseinrichtung 8 die Unterstützungskrafteinheit 6 von dem Passivzustand in den Aktivzustand geschaltet wird. Die Betätigungseinrichtung 8 steht hierzu über einen Seilzug 9, z.B. ein Bowdenzug, mit der Unterstützungskrafteinheit 6 in Wirkverbindung.

Das Schwenkfach 3 weist zur seitlichen Begrenzung des Staufachs 3 eine Seitenwand 10 auf, wobei die Betätigungseinrichtung 8 seitlich außerhalb des Schwenkfachs 3 an der Seitenwand 10 montiert ist. Die Betätigungseinrichtung 8 ist dabei derart angeordnet, sodass die Betätigungseinrichtung 8 in der Offenstellung O bei Bedarf manuell durch den Benutzer ausgelöst werden kann und in der Schließstellung S durch das Staufachgehäuse 2 verdeckt ist. In der Schließstellung S ist die Betätigungseinrichtung 8 dabei zwischen dem Staufachgehäuse 2 und dem Schwenkfach 3 angeordnet. Beispielsweise kann die Unterstützungskrafteinheit 6 durch die Betätigungseinrichtung 8 aktiviert werden, wenn der Benutzer vermutet, dass die auf das Schwenkfach 3 wirkende Last zu groß ist. Beispielsweise kann der Benutzer durch kurzes Anheben des Schwenkfachs 3 das Gewicht abschätzen.

In dem gezeigten Ausführungsbeispiel weist die Unterstützungskrafteinheit 6 zur Erzeugung der Unterstützungskraft eine Gasdruckfeder 11 auf, welche tangential zu dem Schwenklager 4 über ein Halteteil 12 an dem Staufachgehäuse 2 befestigt ist. Das Halteteil 12 ist koaxial zu der Schwenkachse SA angeordnet und kann beispielsweise über Befestigungsmittel an dem Staufachgehäuse 2 festgelegt sein. Beispielsweise ist die Gasdruckfeder 11 gelenkig, insbesondere schwenkbeweglich, an dem Halteteil 12 angebunden.

Die Unterstützungskrafteinheit 6 weist zudem ein an der Seitenwand 10 des Schwenkfachs 3 angeordnetes Führungsteil 13 auf, welches zur Führung der Gasdruckfeder 11 bei einer Bewegung des Schwenkfachs 3 zwischen der Offen- und der Schließstellung O, S dient. Die Gasdruckfeder 11 weist ein Gasdruckfederende 14 auf, wobei das Gasdruckfederende 14 in dem Aktivzustand über das Führungsteil 13 an Schwenkfach 3 in Richtung der Sperrstellung S abgestützt ist, um das Schwenkfach 3 mit der Unterstützungskraft zu beaufschlagen.

In der Figur 1a ist die Unterstützungskrafteinheit 6 beispielsweise in dem Passivzustand geschaltet, wobei hierzu beispielsweise ein Dämpferventil der Gasdruckfeder 11 gesperrt ist. Durch Auslösen der Betätigungseinrichtung 8 durch den Benutzer, z.B. Crew oder Passagier, wird die Gasdruckfeder 11 freigegeben, sodass das Gasdruckfederende 14 zur Übertragung der Unterstützungskraft einen Hub ausführt und das Unterstützungsmoment M auf das Schwenkfach 3 übertragen wird. Beim Schließen des Schwenkfachs 3 drückt die Gasdruckfeder 11 in Richtung der Schließstellung S gegen das Führungsteil 13 und unterstützt somit die Schließbewegung des Schwenkfachs 3. Dabei überträgt die Gasdruckfeder 11 die Unterstützungskraft innerhalb des Teilbereichs TB auf das Schwenkfach 3, wobei der Teilbereich TB beispielsweise durch einen maximalen Hub der Gasdruckfeder 11 begrenzt ist. Beispielsweise endet der Hub in einem Bereich von mehr als 3 cm und/oder weniger als 10 cm vor der Schließstellung, sodass bei Erreichen des maximalen Hubs keine Unterstützungskraft mehr auf das Schwenkfach 3 übertragen wird. Somit erfolgt eine weitere Schließbewegung in die Schließstellung S ohne Kraftunterstützung und ausschließlich durch die Handkraft des Benutzers, um einen Einklemmschutz zu realisieren.

Beim Öffnen des Schwenkfachs 3 von der Schließstellung S in die Offenstellung O wird das ausgefahrene Gasdruckfederende 14 durch das Führungsteil 13 in Richtung der Offenstellung O mitgenommen, sodass die Gasdruckfeder 11 wieder gespannt und die Energie zurückgespeichert wird. Bei Erreichen der Offenstellung O kann das Dämpferventil wieder selbsttätig gesperrt werden, sodass die Gasdruckfeder 11 in dieser Position bis zur nächsten Betätigung durch die Betätigungseinrichtung 8 in dem Passivzustand verbleibt.

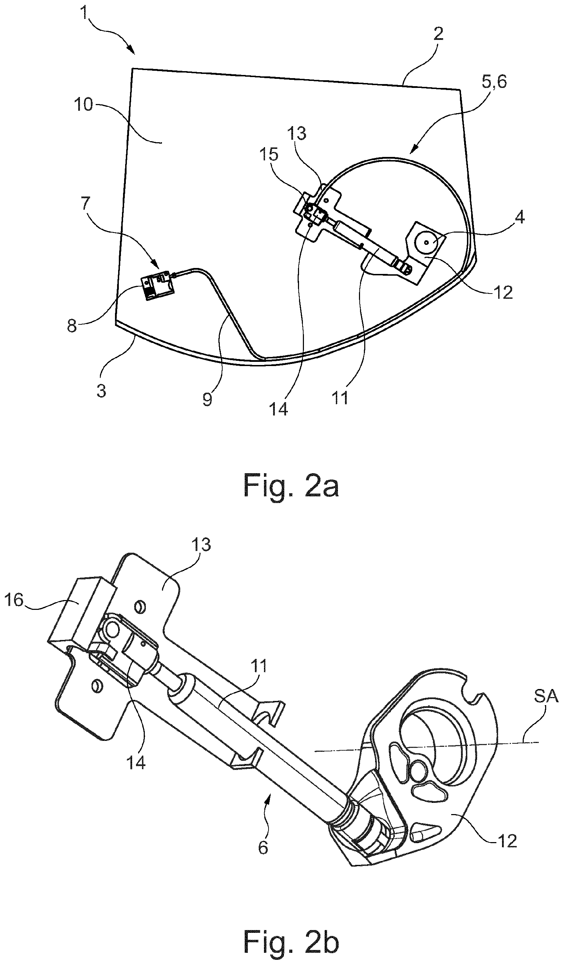

Figur 2a zeigt in gleicher Darstellung wie Figur 1b das Staufach 1 in der Schließstellung S des Schwenkfachs 3, wobei die Unterstützungskrafteinheit 6 in dem Passivzustand geschaltet ist. In dem Passivzustand kann das Schwenkfach 3 von der Offenstellung O, wie in Figur 1a gezeigt, in Richtung der Schließstellung S ohne Kraftunterstützung bewegt werden. Beispielsweise kann zum Schließen eines unbeladenen Staufaches 1 darauf verzichtet werden, die Gasdruckfeder 11 freizugeben, sodass die Unterstützungskrafteinheit 6 während der Schließbewegung des Schwenkfachs 3 in dem Passivzustand verbleibt und somit keine Kraftunterstützung durch die Gasdruckfeder 11 erfolgt. Das Schwenkfach 3 wird somit ausschließlich per Handkraft in die Schließstellung S geführt, wobei die Gasdruckfeder 11 in dem Führungsteil 13 um die Schwenkachse SA ohne Kraftübertragung mitgeführt wird.

Figur 2b zeigt die Unterstützungskrafteinheit 6 aus den vorhergehenden Figuren in einer perspektivischen Darstellung. Wie in Figur 2a gezeigt, ist an dem Gasdruckfederende 14 eine Kugel 15 angeordnet, welche in dem Aktivzustand in einem Angriffspunkt an dem Führungsteil 13 zur Übertragung der Unterstützungskraft abgestützt und/oder abstützbar ist. Das Führungsteil 13 weist hierzu einen Stützabschnitt 16 auf, wobei das Gasdruckfederende 14 in dem Aktivzustand formschlüssig über die Kugel 15 an dem Stützabschnitt 16 anliegt. Beispielsweise ist die Kugel 15 fest mit dem Gasdruckfederende 14 verbunden, wobei der Stützabschnitt 13 an einer der Kugel 15 zugewandten Seite eine Kugelbahn aufweist, in welcher die Kugel 15 formschlüssig aufgenommen und/oder geführt ist. Insbesondere wird durch die Kugel 15 eine gelenkige und/oder reibungsarme Abstützung an dem Führungsteil 14 realisiert, wodurch die Funktionssicherheit der Unterstützungskrafteinheit 6 auch noch bei hohen Lasten gewährleistet werden kann.

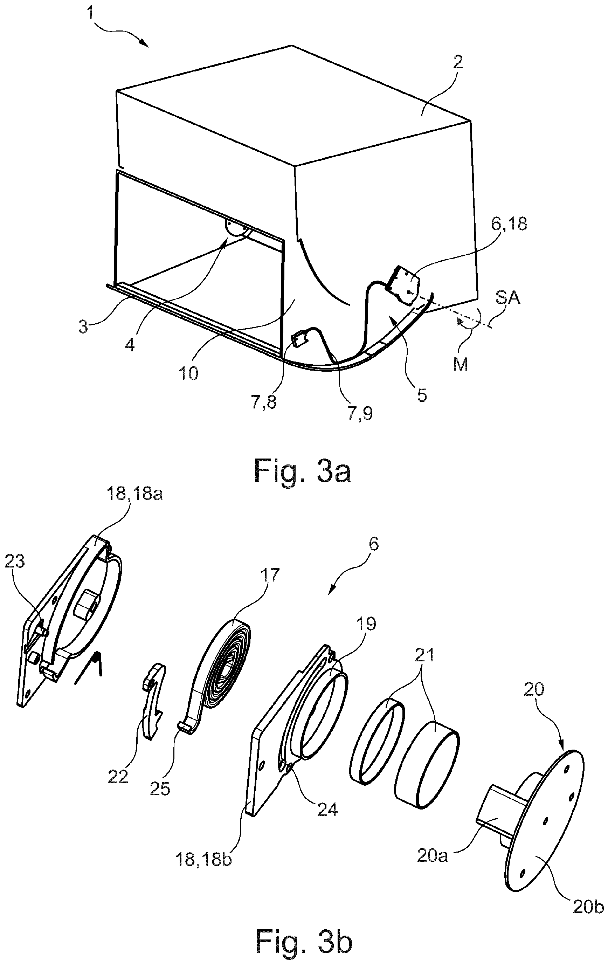

Die Figuren 3a, b zeigen eine alternative Ausführung der Kraftunterstützungsvorrichtung 5 als ein weiteres Ausführungsbeispiel der Erfindung. Dabei ist die Funktion der Kraftunterstützungsvorrichtung 5 der vorhergehenden Beschreibung zu entnehmen, weshalb nur noch auf die relevanten Unterschiede eingegangen wird. Figur 3a zeigt dabei das Schwenkfach 1 in einer perspektivischen Darstellung, wobei das Schwenkfach in der Offenstellung O angeordnet ist. Figur 3b zeigt die Unterstützungskrafteinheit 6 in einer Explosionsdarstellung.

Wie aus der Figur 3b zu entnehmen, weist die Unterstützungskrafteinheit 6 zur Erzeugung der Unterstützungskraft eine Spiralfeder 17 auf, welche koaxial zu der Schwenkachse S in einem Aufnahmegehäuse 18 aufgenommen ist. Dabei liegt ein Mittelpunkt der Spiralfeder 17 auf der Schwenkachse SA, wobei die Spiralfeder 17 um die Schwenkachse SA in dem Aufnahmegehäuse 18 aufgewickelt ist. Dabei ist das Aufnahmegehäuse 18, z.B. über Befestigungsmittel, an dem Staufachgehäuse 2 befestigt. Das Aufnahmegehäuse 18 ist zweiteilig ausgebildet, wobei die Spiralfeder 17 in Bezug auf die Schwenkachse SA axial zwischen einem ersten und einem zweiten Gehäusebauteil 18a, b verliersicher aufgenommen ist. Die beiden Gehäusebauteile 18a, b können beispielsweise lösbar, z.B. über eine Schraubenverbindung, miteinander verbunden sein.

Das zweite Gehäusebauteil 18b weist einen Lagerabschnitt 19 zur Lagerung des Schwenkfachs 3 auf, wobei das Schwenkfach 3 zur Aufnahme des Lagerabschnitts 19 wiederum einen Gegenlagerabschnitt 20, wie in der Figur 3b dargestellt, aufweist, In einer Einbausituation sind der Lagerabschnitt 19 und der Gegenlagerabschnitt 20 zur Bildung des Schwenklagers 4 schwenkbar aneinander abgestützt, sodass das Schwenkfach 3 schwenkbeweglich an dem Aufnahmegehäuse 18 abgestützt ist. Die Unterstützungskrafteinheit 6 weist zudem eine Gleitlagereinrichtung 21 zur Bildung einer Gleitlagerung zwischen dem Lagerabschnitt 19 und dem Gegenlagerabschnitt 20 auf. Die Gleitlagereinrichtung 21 ist beispielsweise durch ein oder mehrere Gleitlagerringe gebildet, welche form- und/oder kraftschlüssig an dem Lagerabschnitt 19 und/oder dem Gegenlagerabschnitt 20 angeordnet sind.

Ferner weist die Betätigungseinheit 7 einen federbelasteten Sperrhebel 22 auf, welcher im Passivzustand der Unterstützungskrafteinheit 11 die Spiralfeder 17 sperrt und im Aktivzustand die Spiralfeder 17 zur Übertragung der Unterstützungskraft freigibt. Der Sperrhebel 22 ist hierzu in der Art einer Sperrklinke ausgebildet, wobei der Sperrhebel 22 um einen an dem ersten Gehäusebauteil 11a angeordneten Bolzenabschnitt 23 drehbar gelagert ist. In einer Einbausituation ist der Sperrhebel 22 über den Seilzug 9 mit der Betätigungseinrichtung 8 verbunden, wobei der Sperrhebel 22 beim Auslösen der Betätigungseinrichtung 8 über den Seilzug 9 mit einer Betätigungskraft beaufschlagt wird, sodass der Sperrhebel 22 verschwenkt wird und anschließend selbsttätig wieder in seine Ausgangslage zurückkehrt.

Das zweite Gehäusebauteil 18b, weist eine Führungskulisse 24 auf, wobei in der Führungskulisse 24 eine an dem Gegenlagerabschnitt 20 angeordnete Mitnahmekontur 20a geführt aufgenommen ist. Der Gegenlagerabschnitt 20 ist als ein separates Bauteil ausgebildet, welches über einen Befestigungsflansch 20b koaxial zu der Schwenkachse SA an der Seitenwand 10 des Schwenkfachs 3 montiert ist. Die Mitnahmekontur 20a ist als ein an dem Befestigungsflansch 20b angeformter Steg ausgebildet, welcher in axialer Richtung in Bezug auf die Schwenkachse SA ausgerichtet ist.

Die Spiralfeder 10 weist ein Spiralfederende 25 auf, wobei das Spiralfederende 25 in dem Aktivzustand der Unterstützungskrafteinheit 6 in Richtung der Sperrstellung S an der Mitnahmekontur 20a anliegt, um die Unterstützungskraft über die Mitnahmekontur 20a auf das Schwenkfach 3 zu übertragen. In dem Passivzustand steht der Sperrhebel 22 mit dem Spiralfederende 25 derart in Eingriff, sodass die Unterstützungskraft direkt in den Sperrhebel 22 und somit in das Aufnahmegehäuse 18 eingeleitet wird.

Zum Schalten des Aktivzustands, wird der Sperrhebel 22 durch Auslösen der Betätigungseinrichtung 8 durch den Benutzer, z.B. Crew oder Passagier verschwenkt, sodass das Spiralfederende 25 freigegeben wird. Die Unterstützungskraft wird somit über das Spiralfederende 25 in die Mitnahmekontur 20a eingeleitet, sodass das Unterstützungsmoment M auf das Schwenkfach 3 übertragen wird. Dabei überträgt die Spiralfeder 17 die Unterstützungskraft innerhalb des Teilbereichs TB, wie in Figur 1a dargestellt, auf das Schwenkfach 3, wobei der Teilbereich TB beispielsweise durch einen Federanschlag, nicht dargestellt, kurz vor der Schließstellung S begrenzt ist. Somit wird ein Einklemmschutz realisiert, wobei in dem Schwenkbereich SB zwischen dem Federanschlag und der Schließstellung S keine Unterstützungskraft auf den Mitnahmekontur 20a übertragen wird und eine weitere Schließbewegung in die Schließstellung S ausschließlich durch die Handkraft des Benutzers erfolgt.

Beim Öffnen des Schwenkfachs 3 von der Schließstellung S in die Offenstellung O wird das Spiralfederende 25 durch die Mitnahmekontur 20a in Richtung der Offenstellung O mitgenommen, sodass die Spiralfeder 17 wieder gespannt und die Energie zurückgespeichert wird. Bei Erreichen der Offenstellung O wird das Spiralfederende 21 wieder durch den Sperrhebel 22 verriegelt, sodass die Spiralfeder 17 in dieser Position bis zur nächsten Betätigung des Sperrhebels 22 durch die Betätigungseinrichtung 8 verbleibt.

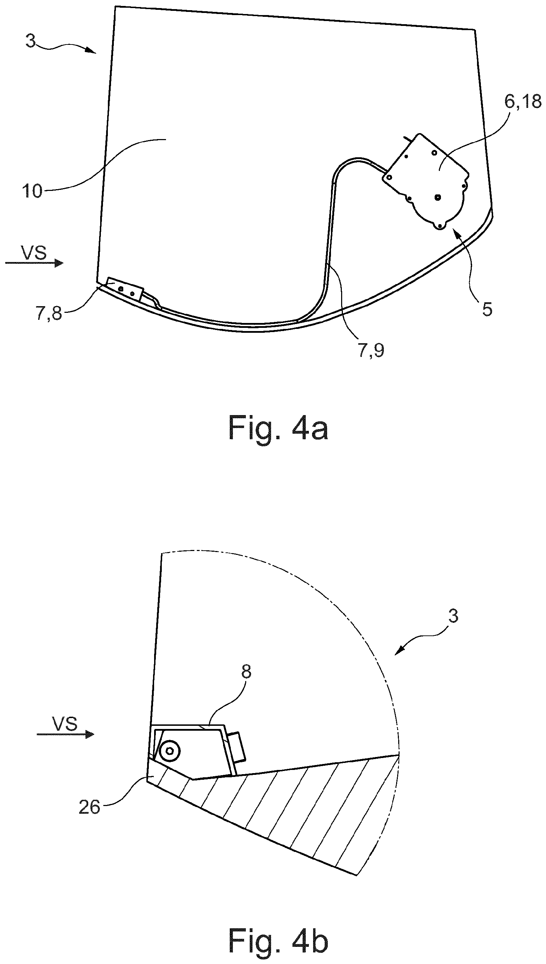

Figur 4a zeigt das Schwenkfach 3 in einer schematischen Schnittdarstellung mit einer alternativen Anordnung der Betätigungseinrichtung 8. Die Betätigungseinrichtung 8 ist dabei innerhalb des Schwenkfachs 3 an einer Vorderseite VS auf dem Schwenkfachboden montiert. Dabei kann die Betätigungseinrichtung 8 in Flugzeuglängsrichtung beispielsweise seitlich oder mittig in dem Schwenkfach 3 angeordnet sein. Insbesondere kann die Betätigungseinrichtung 8 von vorne oder von oben durch den Benutzer ausgelöst werden.

Figur 4b zeigt in einer stark schematisierten Schnittdarstellung eine Detailansicht des Schwenkfachs 3 mit einer weiteren alternativen Anordnung der Betätigungseinrichtung 8. Die Betätigungseinrichtung 8 ist dabei innerhalb des Schwenkfachs 3 an einer Beladekante 26 angeordnet. Die Beladekante 26 ist beispielsweise durch eine an der Vorderseite VS des Schwenkfachs 3 angeordnete Leiste gebildet, welche sich über die gesamte Breite des Schwenkfachs 3 erstreckt. Die Betätigungseinrichtung 8 ist dabei derart an der Beladekante 26 angeordnet, sodass die Betätigungseinrichtung 8 in der Offenstellung O des Schwenkfachs 3 rückseitig betätigbar ist. Der Benutzer muss somit über die Beladungskante 26 greifen, um die Betätigungseinrichtung 8 auslösen zu können.

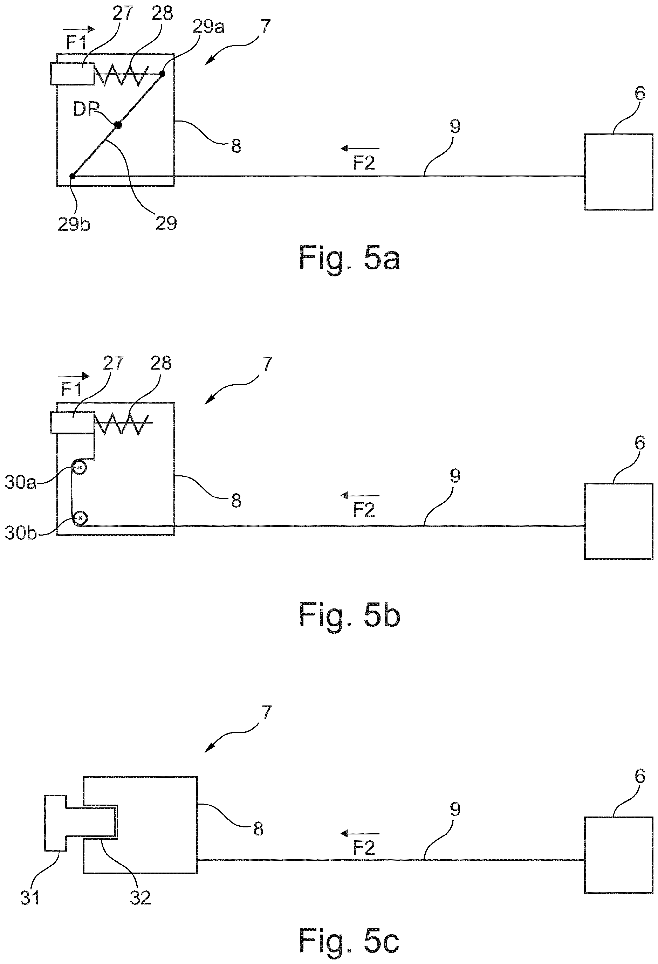

Die Figuren 5a, b, c zeigen jeweils in einer schematischen Darstellung unterschiedliche Ausführungen der Betätigungseinrichtung 8, von denen nur Figur 5c erfindungsgemäß ist. In den Figuren 5a, b weist die Betätigungseinrichtung 8 jeweils einen Druckknopf 27 auf, welcher durch Drücken die Unterstützungskrafteinheit 6 von dem Passivzustand in den Aktivzustand schaltet. Der Druckknopf 27 ist durch ein Federorgan 28 belastet, wobei der gedrückte Druckknopf 27 nach dem Loslassen durch das Federorgan 28 wieder selbsttätig in seine Ausgangslage zurückgedrückt wird.

In der Ausführung gemäß Figur 5a weist die Betätigungseinrichtung 8 einen Kipphebel 29 auf, welcher um einen Drehpunkt DP in einem Gehäuse der Betätigungseinrichtung 8 drehbar gelagert ist. Der Kipphebel 29 ist als ein zweiseitiger Hebel ausgebildet, wobei an dem einen Hebelende 29a der Druckknopf 27 und an dem anderen Hebelende 29b der Seilzug 9 angreift. Beim Drücken des Druckknopfs 27 wird eine Druckkraft F1 erzeugt, welche eine Verdrehung des Kipphebels 29 um den Drehpunkt DP zur Folge hat. Dabei wird die Druckraft F1 durch den Kipphebel 29 in eine auf den Seilzug 9 wirkende Zugkraft F2 umgewandelt, um die Unterstützungskrafteinheit 6 von dem Passiv- in den Aktivzustand zu schalten.

In der Ausführung gemäß Figur 5b weist die Betätigungseinrichtung 8 zwei Umlenkrollen 30a, b auf, welche in dem Gehäuse der Betätigungseinrichtung 8 drehbar gelagert sind. Der Seilzug 9 ist über die beiden Umlenkrollen 30a, b zu dem Druckknopf 27 geführt und fest mit dem Druckknopf 27 verbunden. Beim Drücken des Druckknopfes 27 wird die erzeugte Druckkraft F1 in die Zugkraft F2 umgewandelt, wobei über die beiden Umlenkrollen 30a, b eine Umlenkung der auf den Seilzug 9 wirkenden Zugkraft F2 erfolgt.

Hierzu ist der Seilzug 9 jeweils um 90 Grad durch eine Umlenkrolle 30a und um weitere 90 Grad durch die andere Umlenkrolle 30b umgelenkt, sodass der Seilzug 9 insgesamt um 180 Grad umgelenkt ist.

In der Ausführung gemäß Figur 5c ist die Betätigungseinrichtung 8 zwischen einem Freigabezustand einem Sperrzustand schaltbar, wobei die Betätigungseinrichtung 8 in dem Freigabezustand betätigbar und in dem Sperrzustand gesperrt ist. Die Betätigungseinheit 7 weist ein Schlüsselorgan 31 auf, um die Betätigungseinrichtung 8 von dem Sperrzustand in den Freigabezustand zu schalten. Beispielsweise kann das Schlüsselorgan 31 als ein mechanischer Schlüssel ausgebildet sein. Hierzu kann das Schlüsselorgan 31 beispielsweise eine 6-Kantgeometrie oder eine Sterngeometrie aufweisen, über welche das Schlüsselorgan 31 mit einer komplementären Gegenschnittstelle 32 der Betätigungseinrichtung 8 formschlüssig in Eingriff bringbar ist, um die Betätigungseinrichtung 8 durch eine Rotation des Schlüsselorgans 31 zu entsperren. Dabei kann zugleich durch Rotation des Schlüsselorgans die Zugkraft F2 auf den Seilzug 9 aufgebracht werden, sodass die Unterstützungskrafteinheit 6 betätigt wird. Alternativ kann die Betätigungseinrichtung 8 beispielsweise jedoch auch mittels RFID, Fingerabdruck, induktive Nahfeldkopplung oder Magnetauslösung entsperrt werden.

### Bezugszeichenliste

- 1: Staufach
- 2: Staufachgehäuse
- 3: Schwenkfach
- 4: Schwenklager
- 5: Kraftunterstützungsvorrichtung
- 6: Unterstützungskrafteinheit
- 7: Betätigungseinheit
- 8: Betätigungseinrichtung
- 9: Seilzug
- 10: Seitenwand
- 11: Gasdruckfeder
- 12: Halteteil
- 13: Führungsteil
- 14: Gasdruckfederende
- 15: Kugel
- 16: Stützabschnitt
- 17: Spiralfeder
- 18: Aufnahmegehäuse
- 18a, b: Gehäusebauteile
- 19: Lagerabschnitt
- 20: Gegenlagerabschnitt
- 20a: Mitnahmekontur
- 20b: Befestigungsflansch
- 21: Gleitlagereinrichtung
- 22: Sperrhebel
- 23: Bolzenabschnitt
- 24: Führungskulisse
- 25: Spiralfederende
- 26: Beladekante
- 27: Druckknopf
- 28: Federorgan
- 29: Kipphebel
- 29a, b: Hebelenden
- 30a, b: Umlenkrollen
- 31: Schlüsselorgan
- 32: Gegenschnittstelle

- M: Unterstützungsmoment
- O: Offenstellung
- S: Schließstellung
- F1: Druckkraft
- F2: Zugkraft
- RS: Rückseite
- SA: Schwenkachse
- SB: Schwenkbereich
- SI: Sichtbereich
- TB: Teilbereich

## Patentansprüche

1. Staufach (1) für ein Flugzeug,
mit einem Staufachgehäuse (2) zur Befestigung an einer Flugzeugstruktur,
mit einem Schwenkfach (3) zur Aufnahme von Staugut,
wobei das Schwenkfach (3) in dem Staufachgehäuse (2) über ein Schwenklager (4) in einem Schwenkbereich (SB) um eine Schwenkachse (SA) zwischen einer Offenstellung (O) und einer Schließstellung (S) schwenkbar gelagert ist,
mit einer Kraftunterstützungsvorrichtung (5),
wobei die Kraftunterstützungsvorrichtung (5) eine Unterstützungskrafteinheit (6) aufweist, wobei die Unterstützungskrafteinheit (6) wahlweise in einen Aktivzustand oder einen Passivzustand bringbar ist, wobei die Unterstützungskrafteinheit (6) in dem Aktivzustand eine in Richtung der Schließstellung (S) wirkende Unterstützungskraft bereitstellt, wobei die Unterstützungskraft bei einer Schließbewegung des Schwenkfachs (3) von der Offenstellung (O) in Richtung der Schließstellung (S) eine Kraftunterstützung an dem Schwenkfach (3) bewirkt,
wobei die Kraftunterstützungsvorrichtung (5) eine Betätigungseinheit (7) aufweist, wobei die Betätigungseinheit (7) eine Betätigungseinrichtung (8) zur Betätigung der Unterstützungskrafteinheit (6) aufweist, um die Unterstützungskrafteinheit (6) von dem Passivzustand in den Aktivzustand zu schalten, so dass die Unterstützungskrafteinheit (6) durch einen Benutzer durch Betätigung der Betätigungseinrichtung (8) unabhängig vom Beladungszustand des Schwenkfaches (3) zuschaltbar ist, sodass ein Schließvorgang des Schwenkfachs (3) wahlweise mit oder ohne Kraftunterstützung umgesetzt wird, wobei eine Betätigung der Betätigungseinrichtung (8) in der Schließstellung (S) des Schwenkfachs (3) verhindert und in der Offenstellung (O) des Schwenkfachs (3) möglich ist,
**dadurch gekennzeichnet, dass**
die Betätigungseinrichtung (8) sperrbar ist, wobei die Betätigungseinheit (7) ein Schlüsselorgan (31) zum Entsperren der Betätigungseinrichtung (8) aufweist, wobei die Betätigungseinrichtung (8) zwischen einem Sperrzustand und einem Freigabezustand schaltbar ist, wobei ein Auslösen der Betätigungseinrichtung (8) in dem Sperrzustand verhindert und gesperrt ist und in dem Freigabezustand möglich und freigegeben ist.

2. Staufach (1) nach Anspruch 1, **dadurch gekennzeichnet**, das die Betätigungseinrichtung (8) in dem Schwenkfach (3) und/oder seitlich an dem Schwenkfach (3) angeordnet ist, sodass die Betätigungseinrichtung (8) in der Schließstellung (S) des Schwenkfachs (3) durch das Schwenkfachgehäuse (2) verdeckt ist.

3. Staufach (1) nach Anspruch 2, **dadurch gekennzeichnet, dass** das Schwenkfach (3) an seiner Vorderseite eine Beladekante (26) aufweist, wobei die Betätigungseinrichtung (8) an der Beladekante (26) in dem Schwenkfach (3) angeordnet ist.

4. Staufach (1) nach Anspruch 2, **dadurch gekennzeichnet, dass** das Schwenkfach (3) eine Seitenwand (10) zur seitlichen Begrenzung des Schwenkfachs (3) aufweist, wobei die Betätigungseinrichtung (8) wahlweise innerhalb oder außerhalb des Schwenkfachs (3) an der Seitenwand (10) angeordnet ist.

5. Staufach (1) nach einem der vorhergehenden Ansprüche, **dadurch gekennzeichnet, dass** die Betätigungseinheit (7) einen Seilzug (9) zur Übertragung einer Betätigungskraft von der Betätigungseinrichtung (8) auf die Unterstützungskrafteinheit (6) aufweist.

6. Staufach (1) nach einem der vorhergehenden Ansprüche, **dadurch gekennzeichnet, dass** das Schlüsselorgan (31) als ein mechanischer und/oder elektrischer und/oder magnetischer Schlüssel ausgebildet ist.

7. Staufach (1) nach einem der vorhergehenden Ansprüche, **dadurch gekennzeichnet, dass** das Schlüsselorgan (31) zur Betätigung der Betätigungseinrichtung (8) dient, wobei durch Drehen des Schlüsselorgans (31) die Unterstützungskrafteinheit (6) von dem Passivzustand in den Aktivzustand geschaltet wird.

8. Staufach (1) nach einem der vorhergehenden Ansprüche, **dadurch gekennzeichnet, dass** die Kraftunterstützungsvorrichtung (5) bezüglich der Erzeugung der Unterstützungskraft und/oder der Umschaltung zwischen Aktivzustand und Passivzustand elektrizitätsfrei und/oder rein mechanisch ausgeführt ist.

9. Staufach (1) nach einem der vorhergehenden Ansprüche, **dadurch gekennzeichnet, dass** die Unterstützungskrafteinheit (6) eine Gasdruckfeder (11) zur Erzeugung der Unterstützungskraft aufweist, wobei die Gasdruckfeder (11) über ein Halteteil (12) an dem Staufachgehäuse (2) befestigt ist, wobei ein Gasdruckfederende (14) der Gasdruckfeder (11) in dem Aktivzustand mit dem Schwenkfach (3) in Wirkverbindung bringbar ist, um das Schwenkfach (3) mit der Unterstützungskraft zu beaufschlagen.

10. Staufach (1) nach einem der Ansprüche 1 bis 8, **dadurch gekennzeichnet, dass** die Unterstützungskrafteinheit (6) eine Spiralfeder (17) zur Erzeugung der Unterstützungskraft aufweist, wobei die Spiralfeder (17) in einem an dem Staufachgehäuse (2) angeordneten Aufnahmegehäuse (18) aufgenommen ist, wobei ein Spiralfederende (25) der Spiralfeder (17) in dem Aktivzustand mit dem Schwenkfach (3) in Wirkverbindung bringbar ist, um das Schwenkfach (3) mit der Unterstützungskraft zu beaufschlagen.

11. Flugzeug mit dem Staufach (1) nach einem der vorhergehenden Ansprüche.

## Claims

1. Storage compartment (1) for an aircraft,
with a storge compartment housing (2) for fastening to an aircraft structure,
with a swivelling compartment (3) for receiving storage items,
the swivelling compartment (3) being mounted in the storage compartment housing (2) via a swivel bearing (4) such that it can be swivelled in a swivelling range (SB) about a swivel axis (SA) between an open position (O) and a closed position (S),
with a power assistance apparatus (5),
the power assistance apparatus (5) having a power assistance unit (6),
it being possible for the power assistance unit (6) to be moved selectively into an active state or a passive state, the power assistance unit (6) providing, in the active state, assisting power which acts in the direction of the closed position (S), the assisting power bringing about power assistance on the swivelling compartment (3) in the case of a closing movement of the swivelling compartment (3) from the open position (O) in the direction of the closed position (S),
the power assistance apparatus (5) having an actuating unit (7), the actuating unit (7) having an actuating device (8) for actuating the power assistance unit (6), in order to switch the power assistance unit (6) from the passive state into the active state, with the result that the power assistance unit (6) can be switched on by way of a user by actuation of the actuating device (8) independently of the loading state of the swivelling compartment (3), with the result that the closing operation of the swivelling compartment (3) is implemented selectively with or without power assistance, an actuation of the actuating device (8) being prevented in the closed position (S) of the swivelling compartment (3) and being possible in the open position (O) of the swivelling compartment (3),
**characterized in that** the actuating device (8) can be locked, the actuating unit (7) having a key member (31) for unlocking the actuating device (8), it being possible for the actuating device (8) to be switched between a locked state and a released state, triggering of the actuating device (8) being prevented and locked in the locked state and it being possible and released in the released state.

2. Storage compartment (1) according to Claim 1, **characterized in that** the actuating device (8) is arranged in the swivelling compartment (3) and/or laterally on the swivelling compartment (3), with the result that the actuating device (8) is concealed by the swivelling compartment housing (2) in the closed position (S) of the swivelling compartment (3).

3. Storage compartment (1) according to Claim 2, **characterized in that** the swivelling compartment (3) has a loading edge (26) on its front side, the actuating device (8) being arranged on the loading edge (26) in the swivelling compartment (3).

4. Storage compartment (1) according to Claim 2, **characterized in that** the swivelling compartment (3) has a side wall (10) for laterally delimiting the swivelling compartment (3), the actuating device (8) being selectively arranged inside or outside the swivelling compartment (3) on the side wall (10).

5. Storage compartment (1) according to one of the preceding claims, **characterized in that** the actuating unit (7) has a cable pull (9) for transmitting an actuating force from the actuating device (8) to the power assistance unit (6).

6. Storage compartment (1) according to one of the preceding claims, **characterized in that** the key member (31) is configured as a mechanical and/or electric and/or magnetic key.

7. Storage compartment (1) according to one of the preceding claims, **characterized in that** the key member (31) serves to actuate the actuating device (8), the power assistance unit (6) being switched from the passive state into the active state by way of rotation of the key member (31).

8. Storage compartment (1) according to one of the preceding claims, **characterized in that** the power assistance apparatus (5) is of electricity-free and/or purely mechanical configuration with regard to the generation of the assisting power and/or the switchover between the active state and the passive state.

9. Storage compartment (1) according to one of the preceding claims, **characterized in that** the power assistance unit (6) has a gas pressure spring (11) for generating the assisting power, the gas pressure spring (11) being fastened via a holding part (12) to the storage compartment housing (2), it being possible for one gas pressure spring end (14) of the gas pressure spring (11) to be brought into operative connection with the swivelling compartment (3) in the active state, in order to load the swivelling compartment (3) with the assisting power.

10. Storage compartment (1) according to one of Claims 1 to 8, **characterized in that** the power assistance unit (6) has a spiral spring (17) for generating the assisting power, the spiral spring (17) being received in a receiving housing (18) which is arranged on the storage compartment housing (2), it being possible for one spiral spring end (25) of the spiral spring (17) to be brought into operative connection with the swivelling compartment (3) in the active state, in order to load the swivelling compartment (3) with the assisting power.

11. Aircraft with the storage compartment (1) according to one of the preceding claims.

## Revendications

1. Compartiment de rangement (1) pour un avion, comprenant un boîtier (2) de compartiment de rangement destiné à être fixé à une structure de l'avion, comprenant un compartiment pivotant (3) pour la réception d'articles à ranger,
le compartiment pivotant (3) étant monté de manière pivotante dans le boîtier (2) de compartiment de rangement par l'intermédiaire d'un palier de pivotement (4) dans une zone de pivotement (SB) autour d'un axe de pivotement (SA) entre une position d'ouverture (0) et une position de fermeture (S),
comprenant un dispositif d'assistance de force (5),
le dispositif d'assistance de force (5) présentant une unité de force d'assistance (6), l'unité de force d'assistance (6) étant apte à être amenée sélectivement dans un état actif ou dans un état passif, l'unité de force d'assistance (6) fournissant dans l'état actif une force d'assistance agissant en direction de la position de fermeture (S), la force d'assistance provoquant une assistance de force sur le compartiment pivotant (3) lors d'un mouvement de fermeture du compartiment pivotant (3) depuis la position d'ouverture (O) en direction de la position de fermeture (S),
dans lequel le dispositif d'assistance de force (5) comprend une unité d'actionnement (7), l'unité d'actionnement (7) comprenant un dispositif d'actionnement (8) pour actionner l'unité de force d'assistance (6) afin de faire passer l'unité de force d'assistance (6) de l'état passif à l'état actif, de sorte que l'unité de force d'assistance (6) est apte à être activée par un utilisateur en actionnant le dispositif d'actionnement (8) indépendamment de l'état de chargement du compartiment pivotant (3), de sorte qu'une opération de fermeture du compartiment pivotant (3) est réalisée sélectivement avec ou sans assistance de force,
un actionnement du dispositif d'actionnement (8) étant empêché dans la position de fermeture (S) du compartiment pivotant (3) et étant possible dans la position d'ouverture (O) du compartiment pivotant (3),
**caractérisé en ce que**
le dispositif d'actionnement (8) peut être bloqué, l'unité d'actionnement (7) présentant un organe (31) formant clé pour débloquer le dispositif d'actionnement (8), le dispositif d'actionnement (8) étant apte à être commuté entre un état de blocage et un état de déblocage, un déclenchement du dispositif d'actionnement (8) étant empêché et bloqué dans l'état de blocage et étant possible et libéré dans l'état de déblocage.

2. Compartiment de rangement (1) selon la revendication 1, **caractérisé en ce que** le dispositif d'actionnement (8) est disposé dans le compartiment pivotant (3) et/ou sur le côté du compartiment pivotant (3), de sorte que le dispositif d'actionnement (8) est caché par le boîtier (2) du compartiment pivotant lorsque le compartiment pivotant (3) est en position de fermeture (S).

3. Compartiment de rangement (1) selon la revendication 2, **caractérisé en ce que** le compartiment pivotant (3) présente un bord de chargement (26) sur sa face avant, le dispositif d'actionnement (8) étant disposé sur le bord de chargement (26) dans le compartiment pivotant (3).

4. Compartiment de rangement (1) selon la revendication 2, **caractérisé en ce que** le compartiment pivotant (3) présente une paroi latérale (10) pour délimiter latéralement le compartiment pivotant (3), le dispositif d'actionnement (8) étant agencé au choix à l'intérieur ou à l'extérieur du compartiment pivotant (3) sur la paroi latérale (10).

5. Compartiment de rangement (1) selon l'une des revendications précédentes, **caractérisé en ce que** l'unité d'actionnement (7) comprend un câble (9) pour transmettre une force d'actionnement du dispositif d'actionnement (8) à l'unité de force d'assistance (6).

6. Compartiment de rangement (1) selon l'une des revendications précédentes, **caractérisé en ce que** l'organe (31) formant clé est réalisé sous la forme d'une clé mécanique et/ou électrique et/ou magnétique.

7. Compartiment de rangement (1) selon l'une des revendications précédentes, **caractérisé en ce que** l'organe (31) formant clé sert à actionner le dispositif d'actionnement (8), la rotation de l'organe (31) formant clé permettant de faire passer l'unité de force d'assistance (6) de l'état passif à l'état actif.

8. Compartiment de rangement (1) selon l'une des revendications précédentes, **caractérisé en ce que** le dispositif d'assistance de force (5) est agencé pour générer la force d'assistance et/ou basculer entre l'état actif et l'état passif sans électricité et/ou de manière purement mécanique.

9. Compartiment de rangement (1) selon l'une des revendications précédentes, **caractérisé en ce que** l'unité de force d'assistance (6) présente un ressort à gaz (11) pour générer la force d'assistance, le ressort à gaz (11) étant fixé au boîtier (2) de compartiment de rangement par l'intermédiaire d'une pièce de retenue (12), une extrémité (14) de ressort à gaz du ressort à gaz (11) étant apte à être amenée en liaison fonctionnelle avec le compartiment pivotant (3) dans l'état actif, afin de solliciter le compartiment pivotant (3) avec la force d'assistance.

10. Compartiment de rangement (1) selon l'une des revendications 1 à 8, **caractérisé en ce que** l'unité de force d'assistance (6) présente un ressort spiral (17) pour générer la force d'assistance, le ressort spiral (17) étant logé dans un boîtier de réception (18) disposé sur le boîtier (2) de compartiment de rangement, une extrémité (25) de ressort spiral du ressort spiral (17) étant apte à être mise en liaison fonctionnelle avec le compartiment pivotant (3) dans l'état actif, afin d'appliquer la force d'assistance au compartiment pivotant (3).

11. Avion comprenant le compartiment de rangement (1) selon l'une des revendications précédentes.
